# EUROPEAN PATENT APPLICATION

(11) **EP 2 924 975 A1**
(43) Date of publication of application: **30.09.2015**
(21) Application number: 13856231.9
(22) Date of filing: 20.11.2013
(51) Int. Cl.: H04N 5/232, H04L 12/58, H04M 1/725, H04N 21/4786

(54) **COMMUNICATION DEVICE PROVIDING AN AUTOMATIC RESPONSE TO AN INCOMING MESSAGE**

(30) Priority: 20.11.2012 ES 201231229
(71) Applicant: Crambo, S.A., 28850 Torrejón de Ardoz (Madrid) (ES); Garcia Manchado, Nilo, 28850 Torrejon De Ardoz (ES)
(72) Inventor: GARCÍA MANCHADO, Nilo, E-28850 Torrejón de Ardoz (Madrid) (ES)
(74) Representative: Sahuquillo Huerta, Jesús
(86) International application number: PCT/ES2013/070804
(87) International publication number: WO 2014/080057

(57) **Abstract**

The invention relates to a communication device providing an automatic response to an incoming message, at least comprising a digital camera (1) connected to a processor (2) that, in turn, is connected to an input (3) and output (3a) communication module, and where the processor (2), in turn, comprises an automatic response module (10) connected to the input (3) and output (3a) communication element, to the camera (1) and to a user interface (4); and where the automatic response module (10) is designed so as to activate, receive and process the image captured by the camera (1), that is transferred to a third response formatting element (13) connected to the output communication module (3a).

## Description

The present invention is related to a communication device providing the automatic response to an incoming message therein.

### STATE OF THE ART

In the current state of the art communications devices such as mobile phones, tablets, browsers, PDA, notebook or similar comprising among them devices and physical and logical elements for the exchange of messages, either instantaneous, such as emails, SMS, mobile instant messaging such as WHATSSAP® or other chat-type applications are described.

All these physical and logical systems suffer from the same problem that is the lack of an automatic response system that serves as irrefutable acknowledgement of receipt by the user and not merely the entry into the server of mail or messaging, as the current systems of automatic response for email such as POP, IMAP or similar.

Another desirable characteristic would be to know the user's reaction in real time, characteristic, to date, completely unknown in the sector.

### EXPLANATION OF THE INVENTION

The present invention describes a communication device that is configured to automatically and instantly reply to an incoming message, message being understood as a SMS, email, document transmitted by electronic means or any other equivalent and incoming message to the device, where said message includes a processor configured to execute a series of instructions and activate, at least, a camera built in the device itself, so that the device user is recorded, either photographically or through video, by sending said image to the source device of the message.

In this way, the transmitting communication device, that always has the same features as the receiving communication device, since the device of the invention can logically act with both roles, has an reliable acknowledgment of the message and with absolute constancy of the real receiver of the message

This would allow, for example, connecting the received image with a server which comprises a database and means for the image recognition, for greater security, being used, for example, in either physical or virtual access controls, (electronic banking).

Other possible use is to establish a legal communication with an unequivocal acknowledgement of receipt, as currently a registered or certified fax, but through a communication device.

Another advantageous use of the invention is the evaluation of a commercial campaign, since through the analysis of the gestural reaction of the recipient of the message, by artificial vision and facial recognition means connected to the device object of the invention it would be possible to analyze whether said commercial message has had a proper reception.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### BRIEF DESCRIPTION OF THE FIGURES

- FIG. 1: It shows an internal scheme of the communication device object of the present invention.
- FIG. 2: It shows a communication scheme between two communication devices as those proposed in the present invention.

### DETAILED EXPLANATION OF EMBODIMENTS AND EXAMPLE

As can be seen in the accompanying figures, the communication device providing an automatic response to an incoming message comprises, at least, a camera 1 configured to capture digital images connected to a processor 2 that, in turn, is connected to an input 3 and output 3a communication module as well as to a user interface 4. Said processor 2, in turn, comprises an automatic response module 10 connected to the input 3 and output 3a communication element, to the camera 1 and to the user interface 4.

The operation of the device object of the invention is as follows: when the processor 2 detects the presence of a message in the input communication module 3, analyzes the content of the message and determines whether an automatic response is required. If it is not required, the communication device executes the normal operating instructions. However, if the message comprises an automatic response identifier element, such as for example an internal script, transparent for the user, a message will appear in the user interface 4 requiring user's permission to take an photographic or video, through the camera 1, and send it to the transmitting device, or establish a video transmitting channel, always and in any case, with the transmitting device.

So, physically, the automatic response module 10 comprises, in turn, a first incoming message detector element 11, connected to the input communication module 3 and that, in turn, is connected to a second image processing and control element 12 that, in turn, is connected to the camera 1 and that activates, receives and processes the received image (image or video), that is transferred to a third response formatting element 13 connected to the output communication module 3a, provided that the second image processing and control element 12 has user's permission through the interface 4.

Logically, and because it is a communication device, the elements described can be electronic devices, or programmable logic elements in a general-purpose processor without this invalidates the object of the invention. Thus, the automatic response module 10 can be a set of logical instructions executable by a processor and that incorporate the elements described in the previous paragraph.

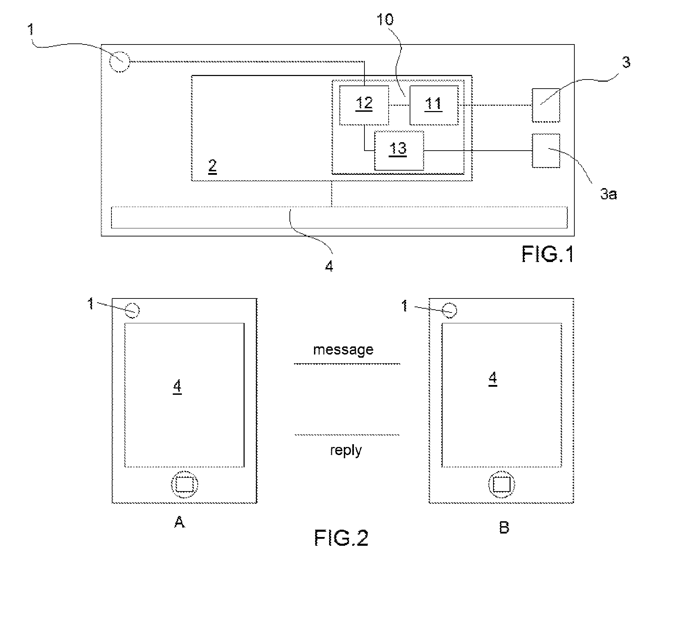

As seen in FIG. 2, the operation implies that the first device A sends a message to the second device B and when B receives it the camera 1 is activated a couple of seconds in advance and records the reaction of B while viewing it or listen it, so that B can automatically send the response in any format of video message attached to its simultaneous printing while it was visualized, heard or read.

In addition, it can be included in the reply message the text, audio or video of the delivered message in such a way that it can be seen the specific reaction relative to the content similarly to that we have when we are before the person and comment him/her anything, We receive much more information and more rich than just reply text, voice or video, creating a much richer communication allowing many fewer misunderstandings.

Another possibility is that the receiver of the reply to know the reaction and reply simultaneously to the creation of this, for example user A has sent a message to B and this at the immediate time when it begins to read or opens the message, the communication on line is activated allowing "A" to see the printing thereof or record such reaction to which it can be included a reply that can be in video, written, voice or mixture thereof.

This system can be added to any type of content, for example a POWERPOINT® presentation, automatically activating the camera when a text file is open that allows checking that a user has read said text, since the camera is activated and related to the document it can be displayed on the screen and assess the tracking or reading thereof in better way than without this system.

It would also be possible to see in the eye itself the reflection of what is being read with a high resolution camera.

A video may also be attached so that at the time in which the user activates the video, the camera is activated and the reaction will be recorded simultaneously to the content to then be able to see what reaction have been had at what particular point.

That is, to a content independently of the format, corresponds a on-video reaction of the receiver to which he himself can add a reply, in such a way that it makes unnecessary the specific written reply, for example or allows viewing in a chain of communications and following continuously the replies of each party and their reactions with the video or text or audio or combination thereof in such communication.

The outstanding feature of this novelty is the capacity of the system to create a simultaneous communication environment when the communication has no real temporal simultaneity, on the one hand, and know the real reaction of the interlocutor to a certain message.

The device may allow that the user does not send automatically the reaction to the message without consent, or certain messages may not be seen or read without the obligation to have a receiver reaction, e.g. due to problems of confidentiality, indeed some messages can activate its content only when the server that sends the message ensures that the camera is active and the message receiver is in the framing, offering the information only when this condition or other that is deemed adequate to build greater security in the communication, is met.

It can be used in phones, tablets, connected televisions or computers. The system may include an e-mail message reader, for example POP3 and send via SMTP the reply of the link to the reaction to the video that may include reply to the message for example in the body of the Email message. The video may have several parts, or may have any type of graphic differentiation between reaction and reply. It can also activate on the device screen the image of the camera so that the receiver sees its own reaction el receptor. Also it can be added a touch instruction which simply may be to touch the screen to active the reply or end the recording or restart the reception if the reaction has not been adequate.

It is also possible to cut the background or face to see only the reaction of face without the receiver knows the scenario of the reception, it can be in a place where you do not want to be known. The reaction to the video without voice or with voice, or audio without video can be activated.

Stopping the reaction can occur due to any indication of the user for a screen switching, for example on a computer, switching from the mail program to another program and it may either create a video file or pause to wait for the receiver either writes the reply or records it on the video.

The reply can also be part of the reception, so it may simply be the reaction itself to the reception of the message.

Through the device of the invention, and as an advantage against the State of the Art, we have the possibility of activation of the camera, the analysis and its subsequent delivery of results without image, for example reading time, gestures, etc. since it is possible that, for certain messages, it is only necessary to know these aspects and the sender would not allow his image to travel across the network. Thus, for example, a client that receives a specific offer could allow the device to be ensured that he sees the offer, however it would like to keep its privacy.

Also the device when it sends a message, it can be or not an option of who sends the message letting it to view the content to the recipient once it checks that he is who is being seen at the camera. For example, a confidential file sent to a specific recipient, when it opens the file, the system activates the camera and system warns who has sent the message by activating the camera in real time so that who has sent the message ensures that who is opening up the content of the message is the recipient, and once verified, the sender allows the opening of the content.

This mechanism can be activated when a directory is open, for example certain directories of a company central computer require when opening the checking of a supervisor who is notified by any means, for example by means of a mail message that notifies the supervisor that a person wants to open the directory, the camera is activated to be able to check who is the person that wants to view the file and the supervisor, who is also recorded, allows or not the petitioner access to information seeking access. The supervisor when he wants to enable the display sends a key to the user so this can see that document.

Another aspect added is the possibility of limiting access to information with other further variable, the position, for example, the access to certain files of a company is only possible from devices that are in a place, this position can be defined for example by access to a given physics, or WIFI network, by GPS position or by any other method, in this way the message that A sends to B can only be displayed when B is on the network of the company or in any place defined by the sender.

Access restrictions may be added to the message and also to the camera that grant a greater security. For example, temporary restrictions, the access to the file is for a maximum of x time, of devices, the number of devices that can see the information is for example 1.

These same mechanisms may also be helpful to know if a user has read or not certain content, it can be attributed to the content a minimum display of content so this is interpreted as read or the eye movements can be followed or user's orders of turning the page or moving down the cursor so that we can interrelate the cursor or the progress of page with a certain period of time. It is also possible to know with the system whether the window is being displayed or not by the receiver and only activate the camera when the user is really in that window of the content as that on the screen. Thus it would be possible to make a time graph per view page and the reactions of the message receiver or the person who accesses the content.

This device or system can be activated in certain areas of a management program of a company or a website, for example. In the accounting areas of a management software, the system can automatically activate the camera to make sure who is the particular person who is acting on the system, in addition to the typical key that includes any program. It can also be used when a user enters the website of a bank to make a transfer or view a certain balance. Any management software defines areas where the device would act according to this standard which can be called high security areas and areas where it would act as usual.

## Claims

1. Communication device providing an automatic response to an incoming message, at least comprising a digital camera (1) connected to a processor (2) that, in turn, is connected to an input (3) and output (3a) communication module as well as to a user interface (4) **characterised in that** said processor (2) in turn, comprises an automatic response module (10) connected to the input (3) and output (3a) communication element, to the camera (1) and to the user interface (4); and where the automatic response module (10) comprises, in turn, a first incoming message detector element (11) connected to the input communication module (3) and that, in turn, is connected to a second image processing and control element (12) that, in turn, is connected to the camera (1) and is designed so as to activate, receive and process the image captured by the camera (1), that is transferred to a third response formatting element (13) connected to the output communication module (3a).

2. Device according to claim 1, where the incoming message is a message or document in electronic format including an automatic response identifier.

3. Use of device according to claims 1 to 2 on a mobile phone.

4. Use of device according to claims 1 to 2 on an electronic tablet.

5. Use of device according to claims 1 to 2 on a computer.
